# EUROPÄISCHE PATENTSCHRIFT

(11) **EP 4 459 138 B1**
(45) Veröffentlichungstag und Bekanntmachung des Hinweises auf die Patenterteilung: **10.09.2025**
(21) Anmeldenummer: 24173706.3
(22) Anmeldetag: 02.05.2024
(51) Int. Cl.: F16B 13/00, F16B 35/06

(54) **DÄMMSTOFFANKER**
INSULATION MATERIAL ANCHOR
ANCRAGE POUR MATÉRIAU ISOLANT

(30) Priorität: 04.05.2023 DE 102023111535
(43) Veröffentlichungstag der Anmeldung: 06.11.2024
(73) Patentinhaber: fischerwerke GmbH & Co. KG, 72178 Waldachtal (DE)
(72) Erfinder: Duffner, Philipp, 72181 Starzach-Bierlingen (DE)
(74) Vertreter: Suchy, Ulrich Johannes

(56) Entgegenhaltungen:
- DE-U1- 202019 001 906

## Beschreibung

Die Erfindung betrifft einen Dämmstoffanker mit den Merkmalen des Oberbegriffs des Anspruchs 1. Der Dämmstoffanker ist zu einem Befestigen eines Anbauteils wie beispielsweise eines Briefkastens oder einer Außenleuchte an einem Wärmedämmverbundsystem vorgesehen. Das Wärmedämmverbundsystem weist beispielsweise eine geschäumte Dämmstoffplatte als Dämmstoff auf, auf dessen Oberfläche eine Putzschicht aufgebracht ist. Der Dämmstoffanker wird durch die Putzschicht in den Dämmstoff eingeschraubt und das Anbauteil wird mittels beispielsweise einer Schraube, die in den Dämmstoffanker geschraubt wird, an dem Dämmstoffanker befestigt.

Das Gebrauchsmuster DE 20 2019 001 906 U1 offenbart einen Dämmstoffanker mit einem Hohlschaft, mit einem Dämmstoffgewinde außen an dem Hohlschaft, mit einer Bohrspitze an einem vorderen Ende des Hohlschafts und mit einem Schraubenkopf mit einem Auflageflansch an einem hinteren Ende des Hohlschafts. Der Hohlschaft weist ein Sackloch zum Einschrauben einer Schraube auf, das durch den Schraubenkopf durchgeht und am hinteren Ende des Dämmstoffankers offen ist. Die Bohrspitze ist kegelförmig und weist zwei gegenüberliegende Bohrmehlnuten auf, die in einer Längsrichtung des Dämmstoffankers verlaufende Umfangsschneiden bilden.

Aufgabe der Erfindung ist, einen Dämmstoffanker mit einem Flansch an einem hinteren Ende vorzuschlagen, der sich leicht in einer harten Putzschicht eines Wärmedämmverbundsystems versenken lässt.

Diese Aufgabe wird erfindungsgemäß durch einen Dämmstoffanker mit den Merkmalen des Anspruchs 1 gelöst. Der erfindungsgemäße Dämmstoffanker weist einen Hohlschaft mit einer Bohrspitze an einem Ende und einem den Hohlschaft außen auf zumindest einem Teil seiner Länge wendelförmig umschließenden Dämmstoffgewinde auf. Ein Dämmstoffgewinde ist ein großflächiges Gewinde mit einer im Verhältnis zu seinem Außendurchmesser oder Kerndurchmesser in radialer Richtung hohen Gewindeflanke, um dem Dämmstoffgewinde in einem Baustoff mit geringer mechanischer Festigkeit einen guten Halt in axialer Richtung des Dämmstoffgewindes zu geben. Insbesondere weist das Dämmstoffgewinde einen Gewindedurchmesser von 20 mm bis 50 mm auf. Insbesondere beträgt das Verhältnis von Gewindedurchmesser des Dämmstoffgewindes zum Durchmesser seines Kerns mindestens 1,5. Das die Bohrspitze aufweisende Ende des Hohlschafts wird nachfolgend als "vorderes Ende des Hohlschafts" bezeichnet. Das Ende des Dämmstoffankers, an dem sich die Bohrspitze befindet beziehungsweise ein dem Hohlschaft fernes vorderes Ende der Bohrspitze, wird nachfolgend als "vorderes Ende des Dämmstoffankers" bezeichnet.

Der Hohlschaft dient einem Einschrauben einer Schraube in den Dämmstoffanker zu einer Befestigung der Schraube mithilfe des Dämmstoffankers an beziehungsweise in dem Dämmstoff. Mit der Schraube lässt sich ein Anbauteil wie beispielsweise ein Briefkasten oder eine Außenleuchte an dem Dämmstoffanker befestigen. Zum Einschrauben der Schraube ist der Hohlschaft an einem hinteren, der Bohrspitze fernen Ende des Dämmstoffankers offen.

Die Bohrspitze ist kein Punkt, sondern sie verjüngt sich vom Hohlschaft weg zu einem Punkt oder auf eine im Verhältnis zu einem Querschnitt des Hohlschafts sehr kleine Stirnfläche am vorderen Ende des Dämmstoffankers, die nicht größer als ein Zehntel des Querschnitts des Hohlschafts ist. Insbesondere ist die Bohrspitze kegelförmig oder pyramidenförmig.

Der Dämmstoffanker weist eine Längsachse auf und der Hohlschaft, die Bohrspitze und das Dämmstoffgewinde sind insbesondere koaxial zu der Längsachse.

An seinem hinteren Ende weist der Hohlschaft des erfindungsgemäßen Dämmstoffankers einen radial über einen Umfang des Hohlschafts überstehenden Flansch auf. Der Flansch ist insbesondere einstückiger Bestandteil des Hohlschafts beziehungsweise des Dämmstoffankers und weist beispielsweise die Form einer Lochscheibe auf, die beispielsweise in einer Radialebene des Dämmstoffankers am hinteren Ende des Hohlschafts angeordnet ist.

An einer dem Hohlschaft zugewandten Vorderseite weist der Flansch eine Stirnschneide zu einem Stirnfräsen einer Putzschicht eines Wärmedämmverbundsystems bei einem Einschrauben des Dämmstoffankers durch die Putzschicht in das Wärmedämmverbundsystem auf. Beim Einschrauben des Dämmstoffankers in das Wärmedämmverbundsystem erzeugt das Dämmstoffgewinde des Dämmstoffankers einen Vorschub des Dämmstoffankers in Richtung der Längsachse, der den Dämmstoffanker in Richtung der Längsachse bewegt. Durch den Vorschub und eine gleichzeitige Drehung des Dämmstoffankers beim Einschrauben in den Dämmstoff fräst die Stirnschneide an der dem Wärmedämmverbundsystem zugewandten Vorderseite des Flansches am hinteren Ende des Hohlschafts eine Senkung in die Putzschicht auf der Oberfläche des Wärmedämmverbundsystems, in die sich der Flansch des Dämmstoffankers gleichzeitig mit dem Fräsen hinein versenkt.

Die Stirnschneide an der Vorderseite des Flansches am hinteren Ende des Hohlschafts des erfindungsgemäßen Dämmstoffankers erleichtert ein Versenken des Flansches in einer harten Putzschicht eines Wärmedämmverbundsystems beim Einschrauben des Dämmstoffankers in das Wärmedämmverbundsystem. Der Flansch des Dämmstoffankers lässt sich oberflächenbündig oder auch vertieft in der Putzschicht des Wärmedämmverbundsystems versenken. Mit "oberflächenbündig" ist gemeint, dass eine dem Hohlschaft abgewandte Rückseite des Flansches bündig mit einer dem Dämmstoff des Wärmedämmverbundsystems abgewandten Oberfläche der Putzschicht ist.

Ein Anbauteil wie beispielsweise ein Briefkasten oder eine Außenleuchte lässt sich mit beispielsweise einer Schraube, die vom hinteren Ende des Dämmstoffankers in dessen Hohlschaft geschraubt wird, an dem Dämmstoffanker, der in das Wärmedämmverbundsystem geschraubt ist, und über den Dämmstoffanker an dem Wärmedämmverbundsystem befestigen.

Der erfindungsgemäße Dämmstoffanker lässt sich grundsätzlich in beliebige Dämmstoffe wie Schaumstoffplatten, Fasermatten und in andere Baustoffe wie Gipskartonplatten schrauben. Der Dämmstoff muss keine Putzschicht oder andere Oberflächenschicht aufweisen.

Die abhängigen Ansprüche haben vorteilhafte Ausgestaltungen und Weiterbildungen der im Anspruch 1 angegebenen Erfindung zum Gegenstand.

Die Stirnschneide erstreckt sich insbesondere von innen vom Hohlschaft nach außen bis zu einem Außenumfang beziehungsweise bis zu einem Außenrand des Flansches. Beim Einschrauben des Dämmstoffankers wird die Längsschneide eine Ringfläche, die der Fläche des Flansches entspricht, in einen Putz fräsen.

In einer Radialebene des Dämmstoffankers ist die Stirnschneide an der Vorderseite des Flansches des Dämmstoffankers bei Ausführungen der Erfindung konkav, das heißt hohlrund oder auch ein- oder mehrfach abgewinkelt mit Innenecken und geraden oder ungeraden Abschnitten zwischen den Innenecken. Das bedeutet, dass sich ein Winkel der Stirnschneide zu einer Axialebene des Dämmstoffankers von innen vom Hohlschaft nach außen zum Außenrand des Flansches ändert, insbesondere vergrößert.

Insbesondere erstreckt sich die Stirnschneide in der Radialebene des Dämmstoffankers und/oder weist insbesondere eine Sichelform auf.

Radial außen weist die Stirnschneide bei Ausgestaltungen der Erfindung einen spitzen Winkel zum Außenrand des Flansches auf, das heißt, die Stirnschneide endet in einem spitzen Winkel zum Außenrand des Flansches.

Eine Ausgestaltungsform des erfindungsgemäßen Dämmstoffankers weist eine Stirnschneide auf, die sich orthogonal zu einer zur Längsachse radial verlaufenden Kante erstreckt und die insbesondere über die gesamte Länge bis zum Außenrand des Flansches eine Gerade bildet, das heißt gerade verläuft.

Vorzugsweise weist der Flansch des erfindungsgemäßen Dämmstoffankers mehrere Stirnschneiden an seiner Vorderseite auf, die gleichmäßig oder ungleichmäßig über einen Umfang verteilt angeordnet sein können. Insbesondere weist der Flansch zwei Stirnschneiden an seiner Vorderseite auf, die einander bezüglich der Längsachse des Dämmstoffankers gegenüber angeordnet sind.

Weiterhin ist bevorzugt, dass die Vorderseite des Flansches eine Stufe in Richtung einer dem Hohlschaft abgewandten Rückseite des Flansches aufweist. Die Stirnschneide bildet insbesondere einen Teil der Stufe, insbesondere das vordere Ende der Stufe.

Durch das Ausbilden der Stufe kann in Drehrichtung hinter der Stufe ein Freiraum gebildet werden, der das axiale Einsenken des Flansches in die Putzschicht beim Fräsen der Senkung für den Flansch in die Putzschicht beim Einschrauben des Dämmstoffankers in das Wärmedämmverbundsystem erleichtert, da Material der Putzschicht und/oder der Dämmung in den Freiraum verdrängt werden kann.

Vorzugsweise ist die Stufe Teil einer Vertiefung, die in Drehrichtung, ausgehend von der Stufe eine Art Frästasche bildet.

In bevorzugter Ausführung der Erfindung weist der Flansch an seiner Vorderseite an radial äußeren Enden der Stirnschneiden am Außenrand des Flansches axial niedrige Nebenschneiden auf. Die Nebenschneiden erstrecken sich in einer Längsrichtung des Dämmstoffankers, das heißt in achsparalleler Richtung oder auch schräg in einem Winkel zur achsparallelen Richtung.

Das Dämmstoffgewinde endet vorzugsweise in einem axialen Abstand vor der Vorderseite des Flansches und der Stirnschneide, um beim Einschrauben des Dämmstoffankers in das Wärmedämmverbundsystem keinen Putz oder Dämmstoff zwischen dem Dämmstoffgewinde und der Vorderseite des Flansches einzuzwängen.

Insbesondere weist die Bohrspitze eine Umfangsschneide an ihrem Umfang auf, die sich in einer Längsrichtung des Dämmstoffankers erstreckt. Die Umfangsschneide kann sich in einer Axialebene des Dämmstoffankers oder in einer zu einer Axialebene des Dämmstoffankers parallelen Ebene befinden. Die Umfangsschneide kann auch in einem konstanten oder sich ändernden Winkel zu der Axialebene des Dämmstoffankers verlaufen. Die Umfangsschneide dient zu einem Zerspanen oder jedenfalls Abtrennen von Dämmstoff und gegebenenfalls einer auf den Dämmstoff aufgetragenen Putzschicht beim Einschrauben des Dämmstoffankers in den Dämmstoff. Beim Einschrauben des Dämmstoffankers in den Dämmstoff bohrt die Bohrspitze mit der Umfangsschneide ein Loch für den Hohlschaft als Kern des Dämmstoffgewindes in den Dämmstoff.

Vorzugsweise weist die Bohrspitze des Dämmstoffankers mehrere Umfangsschneiden auf, die - vorzugsweise gleichmäßig - über einen Umfang der Bohrspitze verteilt angeordnet sind. Insbesondere weist die Bohrspitze zwei Umfangsschneiden auf, die insbesondere, bezogen auf die Längsachse, einander gegenüber angeordnet sind.

Außerdem weist die Bohrspitze vorzugsweise ein Nebengewinde mit einem kleineren Durchmesser als das Dämmstoffgewinde auf. Ein größter Nebengewindedurchmesser des Nebengewindes ist kleiner als ein größter Durchmesser des Dämmstoffgewindes. Das Nebengewinde ist zum Einziehen des Dämmstoffankers vorgesehen, das beim Einschrauben des Dämmstoffankers in einen Dämmstoff früh und vor dem Dämmstoffgewinde "greift". Mit "Greifen" ist gemeint, dass sich das Nebengewinde durch Drehen um seine Achse vorzugsweise mit gleichzeitigem axialem Vorschub in den Dämmstoff schneidet und eine axiale Einziehkraft erzeugt, die mit zunehmendem axialem Eindringen in den Dämmstoff steigt. Das Nebengewinde verbessert beziehungsweise erleichtert das Einschrauben des erfindungsgemäßen Dämmstoffankers insbesondere in einen Dämmstoff mit einer Putzschicht oder in einen harten Dämmstoff oder anderen Baustoff mit erhöhtem Widerstand gegen das Eindringen des Dämmstoffankers.

Bei Ausführungen der Erfindung erstreckt sich das Dämmstoffgewinde in der Längsrichtung des Dämmstoffankers mit nach vorn verkleinerndem Gewindedurchmesser nach vorn bis in einen Längsbereich der Bohrspitze und bis in einen Längsbereich der Umfangsschneide hinein. Der Längsbereich der Bohrspitze ist ihre Erstreckung in der Längsrichtung des Dämmstoffankers von einem hinteren, dem Hohlschaft zugewandten Ende der Bohrspitze bis zu dem vorderen, dem Hohlschaft fernen Ende der Bohrspitze. Entsprechend ist der Längsbereich der Umfangsschneide deren Erstreckung in der Längsrichtung des Dämmstoffankers von einem hinteren bis zu einem vorderen Ende der Umfangsschneide, wobei die Umfangsschneide - wie oben ausgeführt - auch in einem Winkel zur Längsrichtung, das heißt zu einer Axialebene des Dämmstoffankers verlaufen kann.

Dadurch, dass sich das Dämmstoffgewinde am Dämmstoffanker weit nach vorn bis in den Längsbereich der Bohrspitze erstreckt, weist es einen guten axialen Halt in einem Dämmstoff in großer Tiefe, das heißt in einem großen Abstand zu einer Oberfläche des Dämmstoffs, auf.

In bevorzugter Ausgestaltung der Erfindung beginnt das Nebengewinde näher am vorderen Ende des Dämmstoffankers als das Dämmstoffgewinde, derart, dass beim Einschrauben des Dämmstoffankers das Nebengewinde vor dem Dämmstoffgewinde greift. Aufgrund seines kleineren Nebengewindedurchmessers weist das Nebengewinde einen kleineren Einschraubwiderstand auf als das Dämmstoffgewinde und unterstützt ein später als das Einschrauben des Nebengewindes beginnendes Einschrauben des Dämmstoffgewindes, indem das Nebengewinde beim Einschrauben die axiale Einziehkraft erzeugt.

In einer Schneidrichtung an oder vor der Umfangsschneide weist das Nebengewinde vorzugsweise eine Unterbrechung auf. Mit "in Schneidrichtung" ist eine Umfangsrichtung gemeint, in die sich die Schneide beim Einschrauben Dämmstoffankers bewegt. Diese Ausführung der Erfindung ermöglicht zum einen eine Umfangsschneide an der Bohrspitze, die nicht am Gewinde des Nebengewindes unterbrochen ist. Zum anderen kann durch die Unterbrechung des Nebengewindes ein Schneidzahn am Nebengewinde ausgebildet sein, der das Einschneiden des Nebengewindes in den Dämmstoff und - sofern vorhanden - die Putzschicht erleichtert.

Vorzugsweise beginnt das Nebengewinde nicht am vorderen Ende der Bohrspitze, sondern erst in einem Abstand in der Längsrichtung des Dämmstoffankers dahinter. Eine Zentrierwirkung der Bohrspitze ist dadurch verbessert und ein Eindringen der Bohrspitze in den Dämmstoff oder - sofern vorhanden - die Putzschicht erleichtert.

Eine Ausgestaltung der Erfindung sieht vor, dass das Dämmstoffgewinde eine oder mehrere Umfangsschneiden überquert und an einer oder mehreren anderen Umfangsschneiden unterbrochen ist. Eine bevorzugte Ausgestaltung der Erfindung weist zwei Umfangsschneiden auf, und das Dämmstoffgewinde überquert eine der beiden Umfangsschneiden und ist an der anderen Umfangsschneide unterbrochen.

In der Schneidrichtung vor der Umfangsschneide weist die Bohrspitze bei einer Ausführung des erfindungsgemäßen Dämmstoffankers eine Bohrmehlnut, das heißt eine sich in der Längsrichtung des Dämmstoffankers erstreckende radiale Vertiefung unter einen Umfang der Bohrspitze auf. Die Bohrmehlnut nimmt beim Einschrauben in den Dämmstoff zerspanten Dämmstoff beziehungsweise abgetrennte auf und geht insbesondere mit einer Kante in den Umfang der Bohrspitze über, wobei diese Kante die Umfangsschneide bildet.

Das Dämmstoffgewinde überbrückt die Bohrmehlnut oder überbrückt eine oder mehrere Bohrmehlnuten und ist an einer oder mehreren anderen Bohrmehlnuten unterbrochen.

Das Nebengewinde ist wegen seines kleineren Durchmessers vorzugsweise mehrgängig. Es weist insbesondere eine gleiche Steigung wie das Dämmstoffgewinde auf, wobei mit "Steigung" ein axialer Abstand zweier benachbarter Windungen eines Gewindegangs des Gewindes gemeint ist. Beispielsweise weist das Nebengewinde zwei Gewindegänge zwischen Windungen des Gewindes des Dämmstoffgewindes auf.

Eine Ausgestaltung der Erfindung sieht eine Unterbrechung des Nebengewindes vor, die einen Schneidzahn zum Einscheiden in den Dämmstoff bildet. Die Unterbrechung und der Schneidzahn können an der Umfangsschneide - was oben erläutert worden ist - oder an einer anderen Umfangsstelle der Bohrspitze angeordnet sein.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale eines der Ausführungsbeispiele aufweisen, sind möglich.

Die Erfindung wird nachfolgend anhand eines in der Zeichnung dargestellten Ausführungsbeispiels näher erläutert. Es zeigen:
- Figur 1: eine Seitenansicht eines ersten Dämmstoffankers gemäß der Erfindung;
- Figur 2: einen Achsschnitt des Dämmstoffankers aus Figur 1 mit einer der Figur 1 entgegengesetzten Blickrichtung;
- Figur 3: eine Bohrspitze des Dämmstoffankers aus Figur 1 in einer perspektivischen Darstellung;
- Figur 4: die Bohrspitze mit entgegengesetzter Blickrichtung wie in Figur 3;
- Figur 5: eine Vorderseite eines Flansches an einem hinteren Ende des Dämmstoffankers aus Figur 1 in einer perspektivischen Darstellung;
- Figur 6: eine Vorderseite eines Flansches an einem hinteren Ende eines zweiten erfindungsgemäße Dämmstoffankers in einer perspektivischen Darstellung; und
- Figur 7: die Vorderseite des Flansches des Dämmstoffankers aus Figur 6 in eine Schnittdarstellung von vorne gesehen.

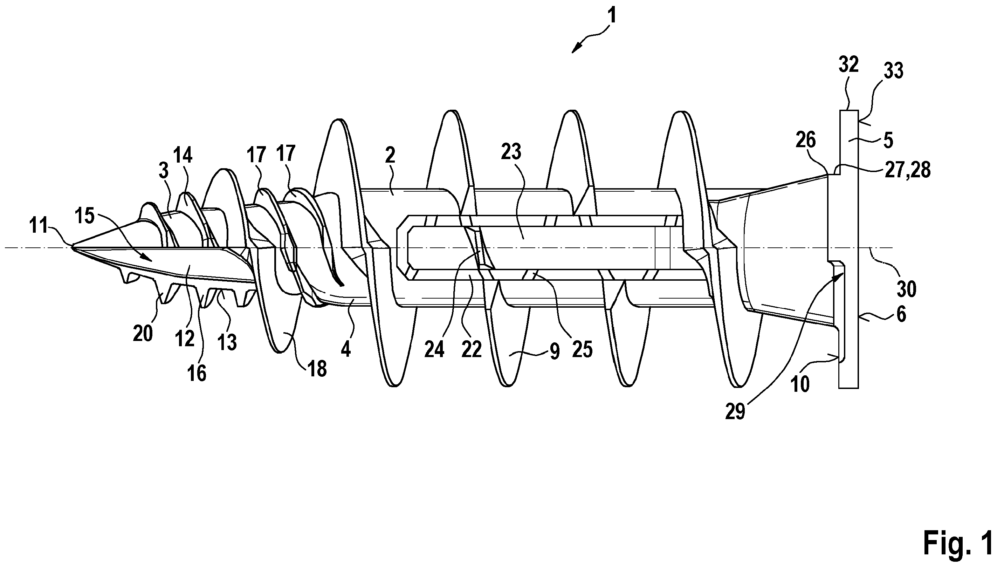

Der in der in den Figuren 1 bis 5 dargestellte erfindungsgemäße Dämmstoffanker 1 ist einstückig als Spritzgussteil aus Kunststoff hergestellt und ist zu einer Befestigung eines nicht dargestellten Anbauteils wie beispielsweise eines Briefkastens oder einer Außenleuchte an einem Dämmstoff vorgesehen, insbesondere an einer geschäumten Dämmstoffplatte eines Wärmedämmverbundsystems, die eine Putzschicht auf ihrer Oberfläche aufweist. Der Dämmstoffanker 1 weist einen zylindrischen Hohlschaft 2 mit einer Bohrspitze 3 an einem vorderen Ende 4 des Hohlschafts 2 und einen scheibenförmigen Flansch 5 in einer Radialebene des Hohlschafts 2 an einem hinteren Ende 6 des Hohlschafts 2 auf.

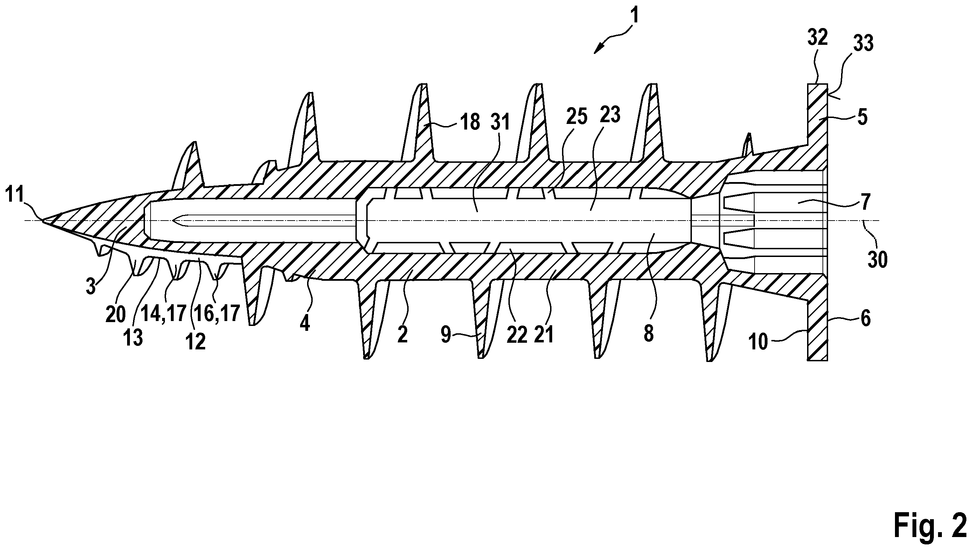

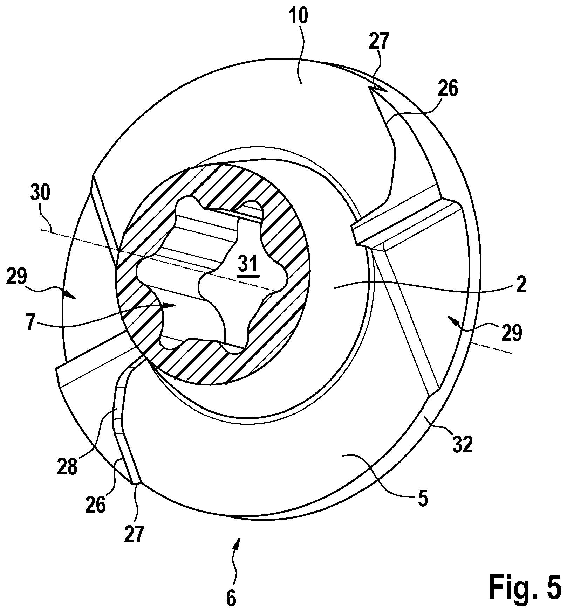

Im hinteren Ende 6 weist der Hohlschaft 2 beziehungsweise der Dämmstoffanker 1 einen Innenstern als Werkzeugsitz 7 (Figuren 2 und 5) zu einem durch Formschluss drehfesten Ansetzen eines nicht dargestellten Drehantriebswerkzeugs auf. Es sind andere Werkzeugsitze 7 wie beispielsweise ein Innensechskant möglich.

Der Hohlschaft 2 weist ein Sackloch 8 zum Einschrauben einer nicht dargestellten Schraube auf, das am hinteren Ende 6 des Hohlschafts 2 beziehungsweise des Dämmstoffankers 1 offen ist und den Werkzeugsitz 7 durchsetzt. Das Sackloch 8 erstreckt sich durch den Hohlschaft 2 hindurch bis in die Bohrspitze 3. Vorn ist das Sackloch 8 geschlossen und endet im Ausführungsbeispiel ungefähr in einer Längsmitte der Bohrspitze 3 (Figur 2). Das Sackloch 8 kann auch länger oder insbesondere kürzer sein und beispielsweise bereits ungefähr in einer Längsmitte des Hohlschafts 2 enden. Das Sackloch 8 kann ein Innengewinde aufweisen. Im Ausführungsbeispiel ist es gewindelos. Das am hinteren Ende 6 des Hohlschafts 2 offene Sackloch 8 kann auch als Schraubkanal 31 zum Einschrauben der nicht dargestellten Schraube in den Dämmstoffanker 1 aufgefasst werden.

Außen weist der Hohlschaft 2 ein Dämmstoffgewinde 9 auf, das den Hohlschaft 2 und einen Teil der Bohrspitze 3 wendelförmig umschließt. Das Dämmstoffgewinde 9 beginnt hinten in einem kurzen axialen Abstand von dem Flansch 5 und erstreckt sich über eine Länge des Hohlschafts 2 und nach vorn bis in einen Längsbereich der Bohrspitze 3. Der Längsbereich der Bohrspitze 3 ist deren axiale Erstreckung beziehungsweise Erstreckung in einer Längsrichtung des Dämmstoffankers 1 vom vorderen Ende 4 des Hohlschafts 2 bis zu einem vorderen, dem Hohlschaft 2 fernen Ende 11 der Bohrspitze 3, das zugleich das vordere Ende 11 des Dämmstoffankers 1 ist.

Im Bereich der Bohrspitze 3 verkleinert sich ein Gewindedurchmesser des Dämmstoffgewindes 9 in Richtung des vorderen Endes 11 der Bohrspitze 3, wobei die Verkleinerung des Gewindedurchmessers des Dämmstoffgewindes 9 bereits im Bereich des Hohlschafts 2 beginnen kann. Mit "Gewindedurchmesser" ist ein Außendurchmesser des Dämmstoffgewindes 9 gemeint. Das Dämmstoffgewinde 9 kann hinten auch an einer dem Hohlschaft 2 zugewandten Vorderseite 10 des Flansches 5 beginnen (nicht dargestellt).

Das Dämmstoffgewinde 9 ist ein in axialer Projektion großflächiges Gewinde um einen guten Halt in dem Dämmstoff oder allgemein einem Baustoff mit niedriger Festigkeit zu haben. "Großflächig" bedeutet, dass das Dämmstoffgewinde 9 eine in radialer Richtung vom Hohlschaft 2 als Kern des Dämmstoffgewindes 9 bis zu einem Außenrand beziehungsweise Umfangsrand des Dämmstoffgewindes 9 hohen Gewindeflansch aufweist im Verhältnis zum Gewindedurchmesser des Dämmstoffgewindes 9 oder zum Durchmesser des Kerns des Dämmstoffgewindes 9, der der Durchmesser des Hohlschafts 2 ist.

Das Dämmstoffgewinde 9 weist einen Gewindedurchmesser zwischen 20 mm und 50 mm und vorzugsweise von etwa 30 mm auf. Ein Verhältnis des Gewindedurchmessers des Dämmstoffgewindes 9 zum Durchmesser seines Kerns beträgt mindestens 1,5 und/oder sein Flankenwinkel ist spitz. Im Ausführungsbeispiel weist das Dämmstoffgewinde 9 einen Flankenwinkel von nicht mehr als 30° auf.

Mit "Bohrspitze 3" ist kein Punkt an dem vorderen Ende 11 des Dämmstoffankers 1 gemeint, sondern ein sich an das vordere Ende 4 des Hohlschafts 2 nach vorn anschließender Axialabschnitt oder Längsabschnitt des Dämmstoffankers 1. Im Ausführungsbeispiel ist die Bohrspitze 3 kegelförmig und verjüngt sich vom Hohlschaft 2 zu einem Punkt am vorderen Ende 11 des Dämmstoffankers 1.

Die Bohrspitze 3 weist zwei einander gegenüber angeordnete Nuten auf, die hier als Bohrmehlnuten 12 bezeichnet werden. Radial beziehungsweise senkrecht auf einen Umfang der Bohrspitze 3 gesehen verjüngen sich die Bohrmehlnuten 12 näherungsweise dreiecksförmig. Die Bohrmehlnuten 12 gehen mit Kanten in eine Umfangsfläche der Bohrspitze 3 über, wobei in einer Drehrichtung beim Einschrauben des Dämmstoffankers 1 hintere Kanten Umfangsschneiden 13 bilden. Somit weist der Dämmstoffanker 1 zwei sich in der Längsrichtung der Bohrspitze 3 erstreckende Umfangsschneiden 13 an seiner Bohrspitze 3 an einander gegenüberliegenden Umfangsstellen der Bohrspitze 3 auf. Im Ausführungsbeispiel befinden sich die beiden Umfangsschneiden 13 bezüglich einer Längsachse 30 des Dämmstoffankers 1 beziehungsweise der Bohrspitze 3 einander gegenüber in einer Axialebene des Dämmstoffankers 1 und der Bohrspitze 3. Möglich sind auch ungerade, sondern in einem Winkel zur Axialebene verlaufende Umfangsschneiden 13, wobei sich der Winkel der Umfangsschneiden 13 zur Axialebene über eine Länge der Umfangsschneiden 13 ändern kann (nicht dargestellt).

Außerdem weist die Bohrspitze 3 ein Nebengewinde 14 auf, dessen größter Nebengewindedurchmesser kleiner als ein größter Gewindedurchmesser des Dämmstoffgewindes 9 ist. Im Ausführungsbeispiel ist der größte Nebengewindedurchmesser nicht größer als halb so groß wie der größte Gewindedurchmesser des Dämmstoffgewindes 9. Das Nebengewinde 14 beginnt nahe am vorderen Ende 11 der Bohrspitze 3, das heißt das Nebengewinde 14 beginnt vor dem Dämmstoffgewinde 9 beziehungsweise näher am vorderen Enden 11 der Bohrspitze 3 als das Dämmstoffgewinde 9. Das Dämmstoffgewinde 9 beginnt etwa an der Längsmitte der Bohrspitze 3. Ein axialer Abschnitt der Bohrspitze 3 vom vorderen Ende 11 bis zum Anfang des Nebengewindes 14 ist gewindelos.

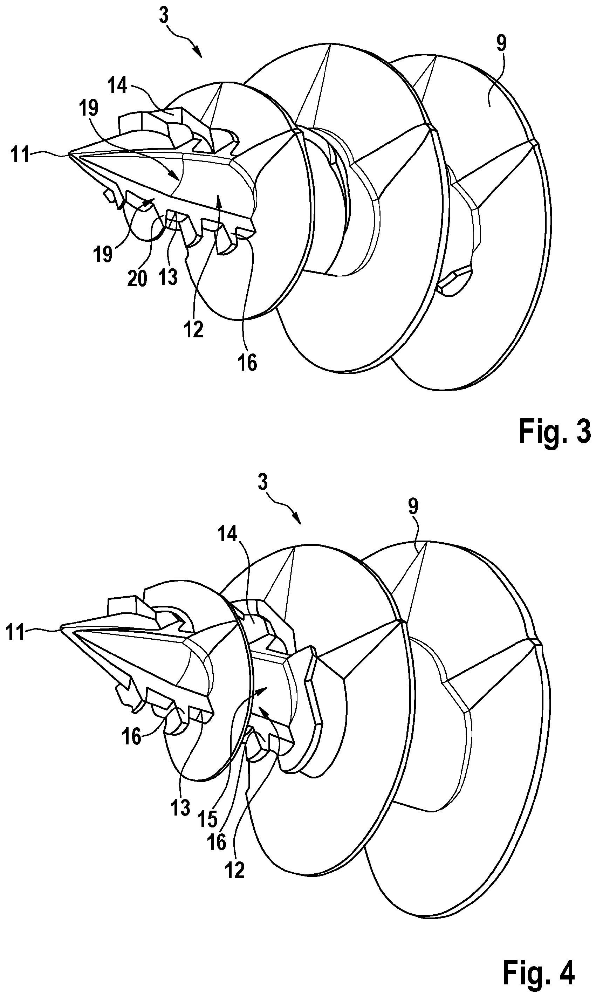

Wie in Figuren 3 und 4 zu sehen ist, ist das Nebengewinde 14 im Bereich der Bohrmehlnuten 12 unterbrochen, wobei in der Einschraubrichtung weisende Endflächen von Gewindegängen 17 des Nebengewindes 14 an Unterbrechungen 15 des Nebengewindes 14 Schneidzähne 16 bilden.

Das Nebengewinde 14 ist mehrgängig, im Ausführungsbeispiel weist es zwei Gewindegänge 17 zwischen zwei axial benachbarten Windungen eines Gewindegangs 18 des Dämmstoffgewindes 9 auf. Das Nebengewinde 14 weist eine gleiche Steigung auf wie das Dämmstoffgewinde 9, wobei die Steigung ein axialer Abstand von zwei axial benachbarten Windungen eines Gewindegangs 17, 18 des Nebengewindes 14 beziehungsweise des Dämmstoffgewindes 9 ist.

Wie in Figur 4 zu sehen ist, überquert das Dämmstoffgewinde 9 eine der beiden Umfangsschneiden 13 und die in der Schneidrichtung vor dieser Umfangsschneide 13 angeordnete Bohrmehlnut 12, wogegen das Dämmstoffgewinde 9 an der anderen Umfangsschneide 13 unterbrochen ist, das heißt eine Unterbrechung 19 im Bereich der in der Einschraubrichtung vor dieser Umfangsschneide 13 angeordneten Bohrmehlnut 12 aufweist (Figur 3). Durch die Unterbrechung 19 weist auch das Dämmstoffgewinde 9 eine in der Schneidrichtung weisende Endfläche auf, die einen Schneidzahn 20 bildet, der ein Einschneiden des Dämmstoffgewindes 9 in den Dämmstoff und gegebenenfalls die Putzschicht erleichtert.

Beim Einschrauben des erfindungsgemäßen Dämmstoffankers 1 erleichtert der gewindelose Abschnitt am vorderen Ende 11 der Bohrspitze 3 ein Eindringen der Bohrspitze 3 bis zum Anfang des Nebengewindes 14 in den Dämmstoff, insbesondere wenn der Dämmstoff eine harte Putzschicht an seiner Oberfläche aufweist.

Bei einem Drehantrieb des Dämmstoffankers 1 mit axialer Beaufschlagung in Richtung des vorderen Endes 11 schneidet sich das Nebengewinde 14 in den Dämmstoff ein und erzeugt eine Axialkraft, die den Dämmstoffanker 1 in den Dämmstoff zieht. Die Schneidzähne 16 des Nebengewindes 14 erleichtern das Einschneiden des Nebengewindes 14 in den Dämmstoff, insbesondere dann, wenn der Dämmstoff die harte Putzschicht an seiner Oberfläche aufweist.

Das Einziehen des Dämmstoffankers 1 in den Dämmstoff bei dem Drehantrieb des Dämmstoffankers 1 mit dem Nebengewinde 14 erleichtert das Einschneiden und Einschrauben des Dämmstoffgewindes 9 in den Dämmstoff insbesondere, wenn der Dämmstoff die harte Putzschicht an seiner Oberfläche aufweist, weil die Putzschicht dem Einschneiden des Dämmstoffgewindes 9 einen höheren Widerstand entgegensetzt als der Dämmstoff ohne die harte Putzschicht.

Beim Einschrauben des Dämmstoffankers 1 in den Dämmstoff trennen die beiden Umfangsschneiden 13 am Umfang der Bohrspitze 3 Partikel vom Dämmstoff und - sofern vorhanden - von der Putzschicht an der Oberfläche des Dämmstoffs ab und bohren beziehungsweise fräsen ein Kernloch für den Hohlschaft 2 des Dämmstoffankers 1 in den Dämmstoff und - sofern vorhanden - durch die Putzschicht an dessen Oberfläche.

In einer Schaftumfangswand 21 seines Hohlschafts 2 weist der erfindungsgemäße Dämmstoffanker 1 ein längliches, achsparalleles Fenster 22 auf, in dem ein stabförmiges Spreizelement 23 angeordnet ist, das sich achsparallel erstreckt und dessen dem hinteren Ende 6 des Hohlschafts 2 zugewandtes hinteres Ende einstückig in die Schaftumfangswand 21 übergeht. Das Spreizelement 23 ist elastisch, es federt in radialer Richtung des Dämmstoffankers 1 beziehungsweise des Hohlschafts 2. Im Ausführungsbeispiel ist das Spreizelement 23 fast so lang wie der Hohlschaft 2 und jedenfalls länger als halb so lang wie der Hohlschaft 2.

Beim Einschrauben einer nicht dargestellten Schraube in den Schraubkanal 31 im Hohlschaft 2 drückt die Schraube das Spreizelement 23 radial auseinander und in den Dämmstoff, was den Halt des Dämmstoffankers 1 im Dämmstoff verbessert.

Im Bereich des Fensters 22 ist das Dämmstoffgewinde 9 unterbrochen. Nahe einem vorderen Ende weist das Spreizelement 23 einen Ankerzahn 24 auf, der radial nach außen von dem Spreizelement 23 absteht und das Dämmstoffgewinde 9 im Bereich des Fensters 22 fortsetzt. Wird das Spreizelement 23 im Dämmstoff radial nach außen gedrückt, dringt der Ankerzahn 24 in den Dämmstoff ein und verbessert den Halt des Dämmstoffankers 1 im Dämmstoff.

Um eine Torsionssteifigkeit des Hohlschafts 2 zu erhöhen, der durch das Fenster 22 geschwächt ist, weist der erfindungsgemäße Dämmstoffanker 1 mehrere Verbinder 25 auf, die einstückig mit der Schaftumfangswand 21 des Hohlschafts 2 und dem Spreizelement 23 sind und die das Spreizelement 23 mit der Schaftumfangswand 21 verbinden. Die Verbinder 25 sind in axialer Richtung des Dämmstoffankers 1 verteilt über eine Länge des Spreizelements 23 in der Umfangsrichtung des Hohlschafts 2 beiderseits des Spreizelements 23 an Längsseiten des Spreizelements 23 in einem Spalt zwischen dem Spreizelement 23 und der Schaftumfangswand 21 des Hohlschafts 2 in dem Fenster 22 der Schaftumfangswand 21 angeordnet. Im Ausführungsbeispiel sind die Verbinder 25 in entgegengesetzten Richtungen schräg zu Radialebenen des Hohlschafts 2 angeordnet, die Verbinder 25 weisen sozusagen Steigungen in entgegengesetzten Richtungen auf. Die Verbinder 25 können auch in gleicher Richtung steigen oder in der Umfangsrichtung, das heißt in den Radialebenen des Hohlschafts 2 angeordnet sein (nicht dargestellt). Es sind Ausführungen des erfindungsgemäßen Dämmstoffankers 1 mit geschlossener Schaftumfangswand 21 ohne Fenster 22 und/oder ohne Spreizelement 23 möglich (nicht dargestellt).

Wird das Spreizelement 23 radial nach außen gedrückt, dehnen und biegen sich die Verbinder 25 elastisch und/oder plastisch und sie können nach Art von Sollbruchstellen reißen.

An seiner dem Hohlschaft 2 zugewandten Vorderseite 10 weist der Flansch 5 Stirnschneiden 26 auf (Figur 5), die sich vom Hohlschaft 2 bis zu einem Außenrand 32 beziehungsweise Umfangsrand des Flansches 5 erstrecken. Im Ausführungsbeispiel weist der Dämmstoffanker 1 zwei Stirnschneiden 26 einander bezüglich der Längsachse 30 des Dämmstoffankers 1 gegenüber an der Vorderseite 10 des Flansches 5 auf. Die Stirnschneiden 26 können sich in einer Axialebene oder in einem Winkel schräg zu einer Axialebene des Dämmstoffankers 2 erstrecken. Im Ausführungsbeispiel sind die Stirnschneiden 26 sichel- beziehungsweise bogen förmig konkav gewölbt beziehungsweise ein- oder mehrfach abgewinkelt.

An den radial äußeren Enden der Stirnschneiden 26 an seinem Außenrand 32 weist der Flansch 5 axial niedrige, sich in achsparalleler Richtung des Dämmstoffankers 1 erstreckende Nebenschneiden 27 auf.

Die Stirnschneiden 26 und die Nebenschneiden 27 an der Vorderseite 10 des Flansches 5 am hinteren Ende 6 des Hohlschafts 2 beziehungsweise des Dämmstoffankers 1 trennen beim Einschrauben des Dämmstoffankers 1 in den Dämmstoff Material ab und erleichtern dadurch ein bündig mit einer Oberfläche versenktes Einbringen des Flansches 5 in die harte Putzschicht auf der Oberfläche des Dämmstoffs, wenn eine solche Putzschicht vorhanden ist. Beim Einschrauben in den Dämmstoff fräsen die Stirnschneiden 26 und die Nebenschneiden 27 eine Senkung für den Flansch 5 in die Putzschicht. Die Stirnschneiden 26, sind an Stufen 28 ausgebildet. In Drehrichtung hinter den Stufen ist jeweils ein axial zurückgesetzter Freiraum 29 zur Aufnahme von Staub und Bruchstücken, die beim Fräsen anfallen, angeordnet.

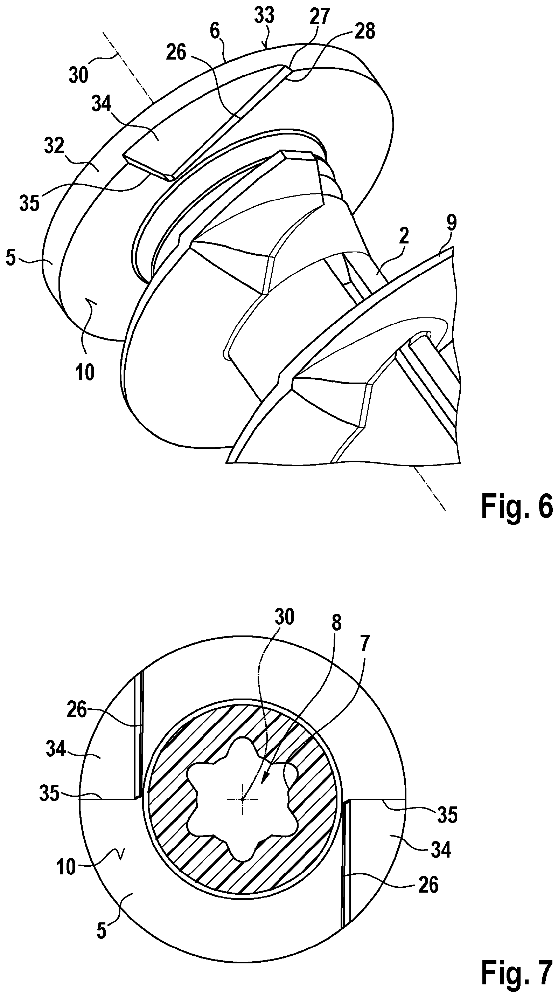

In den Figuren 6 und 7 sind Teile eines zweiten erfindungsgemäßen Dämmstoffankers 1 dargestellt, der sich gegenüber dem Dämmstoffanker 1 der Figuren 1 bis 5 allein in der Ausgestaltung der Vorderseite 10 des Flansches 5 unterscheidet. Um Wiederholungen zu vermeiden, werden nachfolgend nur die Unterschiede beschrieben. Im zweiten Ausführungsbeispiel der Figuren 6 und 7 sind die beiden Stirnschneiden 26 als Geraden ausgebildet, die orthogonal zu Kanten 35 sind, die wiederrum radial zur Längsachse 35 verlaufen. Die Kanten 35 und Stirnschneiden 26 begrenzen eine Vertiefung 34 auf der Vorderseite 10 des Flansches 5. Die Vorderseite 10 bildet, mit Ausnahme der beiden Vertiefungen 34, eine Ebene, in denen die Kanten 35 und die Stirnschneiden 26 liegen. Die Vertiefungen 34 sind am Außenrand 32 des Flansches 5 offen. Sie bilden Frästaschen, die in beim Eindrehen des Dämmstoffankers in eine Putzschicht einschneiden können, allerdings mit geringerem Abtrag als die exponierten Stirnschneiden 26 des Dämmstoffankers der Figuren 1 bis 5. Ein zu tiefes Einschneiden in den Putz kann hierdurch vermieden werden.

### Bezugszeichenliste

- 1: Dämmstoffanker
- 2: Hohlschaft
- 3: Bohrspitze
- 4: vorderes Ende des Hohlschafts 2
- 5: Flansch
- 6: hinteres Ende des Hohlschafts 2
- 7: Werkzeugsitz
- 8: Sackloch
- 9: Dämmstoffgewinde
- 10: Vorderseite des Flansches 5
- 11: vorderes Ende des Dämmstoffankers 1 und der Bohrspitze 3
- 12: Bohrmehlnut
- 13: Umfangsschneide
- 14: Nebengewinde
- 15: Unterbrechung des Nebengewindes 14
- 16: Schneidzahn des Nebengewindes 14
- 17: Gewindegang des Nebengewindes 14
- 18: Gewindegang des Dämmstoffgewindes 9
- 19: Unterbrechung des Dämmstoffgewindes 9
- 20: Schneidzahn des Dämmstoffgewindes 9
- 21: Schaftumfangswand
- 22: Fenster
- 23: Spreizelement
- 24: Ankerzahn
- 25: Verbinder
- 26: Stirnschneide
- 27: Nebenschneide
- 28: Stufe
- 29: Freiraum
- 30: Längsachse
- 31: Schraubkanal
- 32: Außenrand des Flansches 5
- 33: Rückseite des Flansches 5
- 34: Vertiefung auf der Vorderseite 10 des Flansches 5
- 35: Kante

## Patentansprüche

1. Dämmstoffanker (1) zum Einschrauben in einen Dämmstoff eines Wärmedämmverbundsystems zum Befestigen eines Anbauteils an dem Wärmedämmverbundsystem, mit einer Längsachse (30), mit einem Hohlschaft (2), der sich in Richtung der Längsachse (30) des Dämmstoffankers (1) erstreckt und in den eine Schraube in Richtung der Längsachse (30) eingeschraubt werden kann, wobei am Hohlschaft (2) außen ein Dämmstoffgewinde (9) und an einem bezüglich der Längsachse (30) hinteren Ende (6) des Hohlschafts (2) ein radial nach außen überstehender Flansch (5) und an einem dem Flansch (5) fernen vorderen Ende (4) des Hohlschafts (2) eine Bohrspitze (3) angeordnet ist, **dadurch gekennzeichnet, dass** der Flansch (5) an einer dem Hohlschaft (2) zugewandten Vorderseite (10) eine Stirnschneide (26) zum Fräsen einer auf dem Dämmstoff aufgebrachten Putzschicht aufweist.

2. Dämmstoffanker (1) nach Anspruch 1, **dadurch gekennzeichnet, dass** sich die Stirnschneide (26) vom Hohlschaft (2) bis zu einem Außenrand (32) des Flansches (5) erstreckt.

3. Dämmstoffanker (1) nach Anspruch 1 oder 2, **dadurch gekennzeichnet, dass** die Stirnschneide (26) in einer Radialebene des Dämmstoffankers (1) konkav ist.

4. Dämmstoffanker (1) nach einem oder mehreren der Ansprüche 1 bis 3, **dadurch gekennzeichnet, dass** sich die Stirnscheide (26) in der Radialebene erstreckt und insbesondere eine Sichelform aufweist.

5. Dämmstoffanker (1) nach einem oder mehreren der Ansprüche 1 bis 4, **dadurch gekennzeichnet, dass** die Stirnschneide (26) in einem spitzen Winkel zum Außenrand (32) des Flansches (5) endet.

6. Dämmstoffanker (1) nach Anspruch 1 oder 2, **dadurch gekennzeichnet, dass** sich die Stirnschneide (26) orthogonal zu einer zur Längsachse (30) radial verlaufenden Kante (35) und insbesondere über die gesamte Länge gerade erstreckt.

7. Dämmstoffanker (1) nach einem oder mehreren der Ansprüche 1 bis 6, **dadurch gekennzeichnet, dass** der Flansch (5) des Dämmstoffankers (1) mehrere, über einen Umfang verteilt angeordnete Stirnschneiden (26) an seiner Vorderseite (10) aufweist.

8. Dämmstoffanker (1) nach einem oder mehreren der vorhergehenden Ansprüche, **dadurch gekennzeichnet, dass** die Vorderseite (10) des Flansches (5) eine Stufe (28) in Richtung einer dem Hohlschaft (2) abgewandten Rückseite (33) des Flansches (5) aufweist.

9. Dämmstoffanker (1) nach Anspruch 8, **dadurch gekennzeichnet, dass** die Stufe (28) Teil einer Vertiefung (34) auf der Vorderseite (10) des Flansches (5) ist.

10. Dämmstoffanker (1) nach einem oder mehreren der vorhergehenden Ansprüche, **dadurch gekennzeichnet, dass** der Flansch (5) eine sich in einer Längsrichtung des Dämmstoffankers (1) erstreckende Nebenschneide (27) an seiner Vorderseite (10) am Außenrand (32) des Flansches (5) aufweist.

11. Dämmstoffanker (1) nach einem oder mehreren der vorhergehenden Ansprüche, **dadurch gekennzeichnet, dass** das Dämmstoffgewinde (9) mit Abstand in Richtung der Längsachse (30) vor der Stirnschneide (26) endet.

12. Dämmstoffanker (1) nach einem oder mehreren der vorhergehenden Ansprüche, **dadurch gekennzeichnet, dass** die Bohrspitze (3) ein Nebengewinde (14) mit einem Nebengewindedurchmesser aufweist, der kleiner als ein größter Gewindedurchmesser des Dämmstoffgewindes (9) am Holhlschaft (2) ist.

13. Dämmstoffanker (1) nach einem oder mehreren der vorhergehenden Ansprüche, **dadurch gekennzeichnet, dass** der Dämmstoffanker (1) eine sich in der Längsrichtung erstreckende Umfangsschneide (13) an einem Umfang der Bohrspitze (3) aufweist.

## Claims

1. Insulation anchor (1) for screwing into an insulating material of a composite thermal insulation system for fastening an attachment part to the composite thermal insulation system, with a longitudinal axis (30), with a hollow shaft (2) which extends in the direction of the longitudinal axis (30) of the insulation anchor (1) and into which a screw can be screwed in the direction of the longitudinal axis (30), wherein an insulation thread (9) is provided on the outside of the hollow shaft (2) is arranged on the outside of the hollow shaft (2) and a flange (5) projecting radially outwards is arranged at a rear end (6) of the hollow shaft (2) relative to the longitudinal axis (30) and a drill tip (3) is arranged at a front end (4) of the hollow shaft (2) remote from the flange (5), **characterized in that** the flange (5) has a front cutting edge (26) on a front side (10) facing the hollow shaft (2) for milling a layer of plaster applied to the insulating material.

2. Insulation anchor (1) according to claim 1, **characterized in that** the front cutting edge (26) extends from the hollow shaft (2) to an outer edge (32) of the flange (5).

3. Insulation anchor (1) according to claim 1 or 2, **characterized in that** the front cutting edge (26) is concave in a radial plane of the insulation anchor (1).

4. Insulation anchor (1) according to one or more of claims 1 to 3, **characterized in that** the front cutting edge (26) extends in the radial plane and in particular has a crescent shape.

5. Insulation anchor (1) according to one or more of claims 1 to 4, **characterized in that** the front cutting edge (26) ends at an acute angle to the outer edge (32) of the flange (5).

6. Insulation anchor (1) according to claim 1 or 2, **characterized in that** the front cutting edge (26) extends orthogonally to an edge (35) extending radially to the longitudinal axis (30) and, in particular, extends straight over the entire length.

7. Insulation anchor (1) according to one or more of claims 1 to 6, **characterized in that** the flange (5) of the insulation anchor (1) has several front cutting edges (26) distributed around its circumference on its front side (10).

8. Insulation anchor (1) according to one or more of the preceding claims, **characterized in that** the front side (10) of the flange (5) has a step (28) in the direction of a back side (33) of the flange (5) facing away from the hollow shaft (2).

9. Insulation anchor (1) according to claim 8, **characterized in that** the step (28) is part of a recess (34) on the front side (10) of the flange (5).

10. Insulation anchor (1) according to one or more of the preceding claims, **characterized in that** the flange (5) has a secondary cutting edge (27) extending in a longitudinal direction of the insulation anchor (1) on its front side (10) at the outer edge (32) of the flange (5).

11. Insulation anchor (1) according to one or more of the preceding claims, **characterized in that** the insulation thread (9) ends at a distance in the direction of the longitudinal axis (30) in front of the front cutting edge (26).

12. Insulation anchor (1) according to one or more of the preceding claims, **characterized in that** the drill tip (3) has a secondary thread (14) with a secondary thread diameter which is smaller than a largest thread diameter of the insulation thread (9) on the hollow shank (2).

13. Insulation anchor (1) according to one or more of the preceding claims, **characterized in that** the insulation anchor (1) has a circumferential cutting edge (13) extending in the longitudinal direction at a circumference of the drill tip (3).

## Revendications

1. Ancrage pour isolant (1) à visser dans un isolant d'un système composite d'isolation thermique pour fixer un élément rapporté sur le système composite d'isolation thermique, avec un axe longitudinal (30), avec une tige creuse (2) qui s'étend dans la direction de l'axe longitudinal (30) de l'ancrage pour isolant (1) et dans lequel une vis peut être vissée dans la direction de l'axe longitudinal (30), un filetage pour isolant (8) étant réalisé à l'extérieur sur la tige creuse (2) est disposé à l'extérieur sur la tige creuse (2) et une bride (5) faisant saillie radialement vers l'extérieur est disposée sur une extrémité arrière (6) de la tige creuse (2) par rapport à l'axe longitudinal (30) et une pointe de perçage (3) est disposée sur une extrémité avant (4) de la tige creuse (2) éloignée de la bride (5), **caractérisée en ce que** la bride (5) présente, sur une face avant (10) tournée vers la tige creuse (2), un tranchant frontal (26) pour fraiser une couche d'enduit appliquée sur le matériau isolant.

2. Ancrage pour isolant (1) selon la revendication 1, **caractérisé en ce que** le tranchant frontal (26) s'étend de la tige creuse (2) jusqu'à un bord extérieur (32) de la bride (5).

3. Ancrage pour isolant (1) selon la revendication 1 ou 2, **caractérisé en ce que** le tranchant frontal (26) est concave dans un plan radial de l'ancrage pour isolant (1).

4. Ancrage pour isolant (1) selon l'une ou plusieurs des revendications 1 à 3, **caractérisé en ce que** la lame frontale (26) s'étend dans le plan radial et présente en particulier une forme de faucille.

5. Ancrage pour isolant (1) selon l'une ou plusieurs des revendications 1 à 4, **caractérisé en ce que** le tranchant frontal (26) se termine en formant un angle aigu avec le bord extérieur (32) de la bride (5).

6. Ancrage pour isolant (1) selon la revendication 1 ou 2, **caractérisé en ce que** le tranchant frontal (26) s'étend orthogonalement à une arête (35) s'étendant radialement par rapport à l'axe longitudinal (30) et en particulier de manière rectiligne sur toute la longueur.

7. Ancrage pour isolant (1) selon une ou plusieurs des revendications 1 à 6, **caractérisé en ce que** la bride (5) de l'ancrage pour isolant (1) présente plusieurs tranchants frontaux (26) répartis sur une périphérie sur sa face avant (10).

8. Ancrage pour isolant (1) selon une ou plusieurs des revendications précédentes, **caractérisé en ce que** la face avant (10) de la bride (5) présente une étape (28) en direction d'une face arrière (33) de la bride (5) opposée à la tige creuse (2).

9. Ancrage pour isolant (1) selon la revendication 8, **caractérisé en ce que** l'étape (28) fait partie d'un renfoncement (34) sur la face avant (10) de la bride (5).

10. Ancrage pour isolant (1) selon une ou plusieurs des revendications précédentes, **caractérisé en ce que** la bride (5) présente un tranchant secondaire (27) s'étendant dans une direction longitudinale de l'ancrage pour isolant (1) sur sa face avant (10) au niveau du bord extérieur (32) de la bride (5).

11. Ancrage pour isolant (1) selon une ou plusieurs des revendications précédentes, **caractérisé en ce que** le filetage pour isolant (9) se termine à distance dans la direction de l'axe longitudinal (30) devant le tranchant frontal (26).

12. Ancrage pour isolant (1) selon une ou plusieurs des revendications précédentes, **caractérisé en ce que** la pointe de perçage (3) présente un filetage secondaire (14) dont le diamètre est inférieur au plus grand diamètre du filetage pour isolant (9) sur la tige creuse (2).

13. Ancrage pour isolant (1) selon une ou plusieurs des revendications précédentes, **caractérisé en ce que** l'ancrage pour isolant (1) présente un tranchant périphérique (13) s'étendant dans la direction longitudinale sur un pourtour de la pointe de perçage (3).
